# EUROPEAN PATENT APPLICATION

(11) **EP 2 143 333 A1**
(43) Date of publication of application: **13.01.2010**
(21) Application number: 08740433.1
(22) Date of filing: 15.04.2008
(51) Int. Cl.: A21C 9/08, A21C 5/00

(54) **DOUGH WEIGHING CONVEYOR, AND DOUGH WEIGHING AND CUTTING DEVICE**

(30) Priority: 17.04.2007 JP 2007108535
(71) Applicant: RHEON AUTOMATIC MACHINERY CO., LTD., Utsunomiya-shi Tochigi 320-0071 (JP)
(72) Inventor: Eiji Kuribayashi, Utsunomiya-shi Tochigi 320-0071 (JP); Katsumichi Higuchi, Utsunomiya-shi Tochigi 320-0071 (JP)
(74) Representative: Grünecker, Kinkeldey, Stockmair & Schwanhäusser Anwaltssozietät
(86) International application number: PCT/JP2008/057347
(87) International publication number: WO 2008/129985

(57) **Abstract**

A dough measuring conveyor (5) for measuring a food dough (1) includes: a measuring unit (13) for measuring a weight of the food dough (1); a conveying unit (17) for conveying the food dough (1); and a dough pressing unit (25A, 25B) for pressing the food dough against the conveying unit (17) from above the conveying unit (17) to prevent the food dough from being lifted up. The dough pressing unit (25A, 25B) is integrally provided to a frame of the measuring conveyor (5). A dough measuring and cutting apparatus includes: a transferring conveyor (3) for conveying the food dough onto the dough measuring conveyor (5); a cutting device (9) for cutting the food dough; and a measurement-checking conveyor (19) for performing measurement check of a cut piece (1A) cut off from the food dough.

## Description

### TECHNICAL FIELD

The present invention relates to a dough measuring conveyor for measuring a food dough such as a bread dough, for example, and a dough measuring and cutting apparatus using the dough measuring conveyor. More specifically, the present invention relates to a measuring conveyor and a dough measuring and cutting apparatus in which, when a cutting device cuts a food dough into a piece having a measured weight, the piece of the food dough cut off by a cutting blade in the cutting device can be prevented from adhering (sticking) to the cutting blade and being lifted up.

### BACKGROUND ART

A continuous food dough in a band form, such as a bread dough, for example, is conveyed onto a measuring conveyor by a transferring conveyor and, when a value measured by the measuring conveyor reaches a set value, the food dough is cut into a piece having a predetermined weight by a cutting apparatus. This technique is disclosed in, for example, Japanese Patent Application, Laid-Open No. 2006-101886 (Patent Document 1).

In the above Patent Document 1, a configuration for cutting the continuously conveyed food dough into the piece having the predetermined weight is as follows.

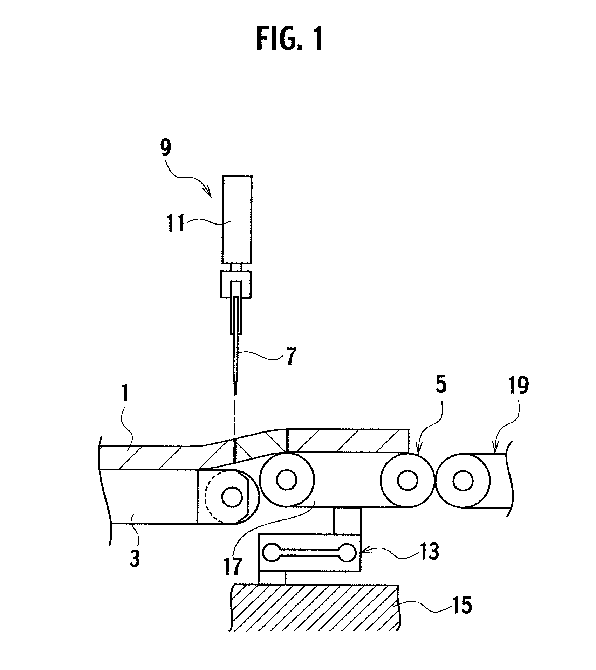

Specifically, as shown in Fig. 1, a measuring conveyor 5 for measuring a food dough 1 is arranged downstream of a transferring conveyor 3 for conveying the food dough 1. A cutting device 9 having a vertically-movable cutting blade 7 for cutting the food dough 1 is arranged between the measuring conveyor 5 and the transferring conveyor 3. The cutting blade 7 in the cutting device 9 is moved up and down by an action of a suitable vertical movement actuator 11 such as an air cylinder.

The measuring conveyor 5 includes, on a mount 15, a load cell 13 as a measuring unit for measuring a weight of the food dough 1, and also includes, on the load cell 13, a belt conveyor 17 as a conveying unit for conveying the food dough 1. Moreover, a measurement-checking conveyor 19 for performing measurement check of a cut piece cut off from the food dough is arranged downstream of the measuring conveyor 5, the measurement-checking conveyor 19 having the same configuration as that of the measuring conveyor 5.

In the above configuration, the food dough 1 is conveyed onto the measuring conveyor 5 from the transferring conveyor 3, and then, when a value measured by the measuring conveyor 5 becomes equal to a predetermined value, the cutting device 9 is activated to cut the food dough 1 with the cutting blade 7. Thereafter, the measurement-checking conveyor 19 checks whether the weight of the piece cut off and separated from the food dough is accurate. Thus, cutting timing of the cutting device 9 is controlled. Therefore, the food dough 1 can be accurately cut into a piece having a predetermined weight.

Incidentally, when the food dough cut piece cut off and separated from the food dough 1 has a relatively large weight, the cut piece does not adhere (stick) to the cutting blade 7 in the cutting device 9 and is not lifted up. Moreover, the measuring conveyor 5 and the measurement-checking conveyor 19 can be accelerated immediately after the cutting. Accordingly, there is no problem in such case. On the other hand, when the cut piece has a relatively small size and weight, the cut piece may adhere to the cutting blade 7 and may be integrally lifted up during upward movement of the cutting blade 7.

When the cut piece adheres (sticks) to the cutting blade 7 in the cutting device 9 and is integrally lifted up as described above, the cut piece may fall onto the belt conveyor 17 during upward movement of the cutting blade 7, and then may roll, for example, on the belt conveyor 17. Accordingly, even when the acceleration of the measuring conveyor 5 is started immediately after cutting of the food dough 1, it may take time to convey the cut piece to the measurement-checking conveyor 19 on the downstream. Therefore, when the cut piece adheres to the cutting blade 7 and is temporarily lifted up, a time during which the cut piece is lifted up is wastefully spent in the conveyance of the cut piece

Meanwhile, in a case where the measuring conveyor 5 is started to be accelerated and conveys the cut piece to the measurement-checking conveyor 19, a part of a tip portion of the food dough 1 to be cut next is conveyed onto an upstream end of the measuring conveyor 5 when the cut piece is conveyed to the vicinity of the downstream end of the measuring conveyor 5. Such conveyance is intended to improve productivity. Therefore, in order to cut the food dough 1 after more accurately measuring the weight of the food dough 1 to be cut next, the cut piece thus cut off needs to be quickly conveyed onto the measurement-checking conveyor 19 from the measuring conveyor 5. Specifically, it is preferable to shorten as much as possible the time during which the cut piece and the part of the tip portion of the food dough 1 to be cut next are both placed on the measuring conveyor 5.

Here, when the cut piece adheres (sticks) to the cutting blade 7 and is lifted up as described above, the cut piece and the part of the tip portion of the food dough 1 to be cut next are both placed on the measuring conveyor 5 for a long time. In some cases, when the food dough to be cut next is measured, the measured weight may exceed the weight at which the food dough is to be cut. Therefore, during measuring the food dough to be cut next after the cut piece is conveyed onto the measurement-checking conveyor 19, a conveyance speed of the transferring conveyor 3 is required to be reduced so as to prevent the value measured by the measuring conveyor 5 from exceeding the set value for cutting. Therefore, the food dough to be cut next cannot be conveyed quickly onto the measuring conveyor 5. Thus, further improvement has been demanded for improving productivity.

The present invention was made in view of the conventional problems as described above. It is an object of the present invention to provide a dough measuring conveyor and a dough measuring and cutting apparatus in which, when a cutting device cuts a food dough into a piece having a measured weight, the piece of the food dough cut off by a cutting blade in the cutting device can be prevented from adhering (sticking) to the cutting blade and from being lifted up.

### DISCLOSURE OF INVENTION

In order to achieve the above object, a first aspect of the present invention is a dough measuring conveyor for measuring a food dough, including: a measuring unit for measuring a weight of the food dough; a conveying unit for conveying the food dough; and a dough pressing unit for pressing the food dough against the conveying unit from above the conveying unit to prevent a cut piece of the food dough from being lifted up.

A second aspect of the present invention is the dough measuring conveyor according to the first aspect, in which the dough pressing unit is provided to be vertically adjustable.

A third aspect of the present invention is the dough measuring conveyor according to the second aspect, in which the dough pressing unit is provided integrally with a frame of the conveying unit.

A fourth aspect of the present invention is the dough measuring conveyor according to the second aspect, in which the dough pressing unit is provided on a mount for mounting the dough measuring conveyor.

A fifth aspect of the present invention is the dough measuring conveyor according to the fourth aspect, in which the dough pressing unit is provided on the mount via a height position adjustment mechanism.

A sixth aspect of the present invention is a dough measuring and cutting apparatus including: a dough measuring conveyor for measuring a food dough; a transferring conveyor for conveying the food dough onto the dough measuring conveyor; a cutting device for cutting the food dough at a position between the dough measuring conveyor and the transferring conveyor; a measurement-checking conveyor for performing measurement check of a cut piece cut off from the food dough, the measurement-checking conveyor being arranged downstream of the dough measuring conveyor; a dough pressing unit for preventing the cut piece of the food dough from being lifted up at a position above the dough measuring conveyor; and a rear end detecting sensor for detecting a rear end of the cut piece conveyed on the measurement-checking conveyor.

A seventh aspect of the present invention is a dough measuring and cutting apparatus including: a dough measuring conveyor for measuring a food dough; a transferring conveyor for conveying the food dough onto the dough measuring conveyor; a cutting device for cutting the food dough at a position between the dough measuring conveyor and the transferring conveyor; a measurement-checking conveyor for performing measurement check of a cut piece cut off from the food dough, the measurement-checking conveyor being arranged downstream of the dough measuring conveyor; and a dough pressing unit for preventing the cut piece of the food dough from being lifted up at position above the dough measuring conveyor. In the above configuration, the dough measuring and cutting apparatus is configured to allow the measuring conveyor to start measurement of a portion to be measured next, when a conveyance time of the dough measuring conveyor after completion of cutting by the cutting device becomes equal to a set value, or when a conveyance distance of the cut piece conveyed by the dough measuring conveyor from the cutting position becomes equal to a set value.

According to the first to seventh aspects of the present invention described above, productivity can be improved even when the cut piece cut off and separated from the food dough has a relatively small size and weight, since the cut piece can be prevented from adhering to a cutting blade in the cutting device and being lifted up.

### BRIEF DESCRIPTION OF THE DRAWINGS

Fig. 1 is an explanatory view showing a conventional configuration.
Fig. 2 is a front view showing a configuration of a dough measuring and cutting apparatus according to an embodiment of the present invention.

### BEST MODE FOR CARRYING OUT THE INVENTION

With reference to the drawings, embodiments of the present invention will be described. In the following description, constituent components achieving the same functions as those of the conventional configuration described above are denoted by the same reference numerals, and repetitive description thereof will be omitted.

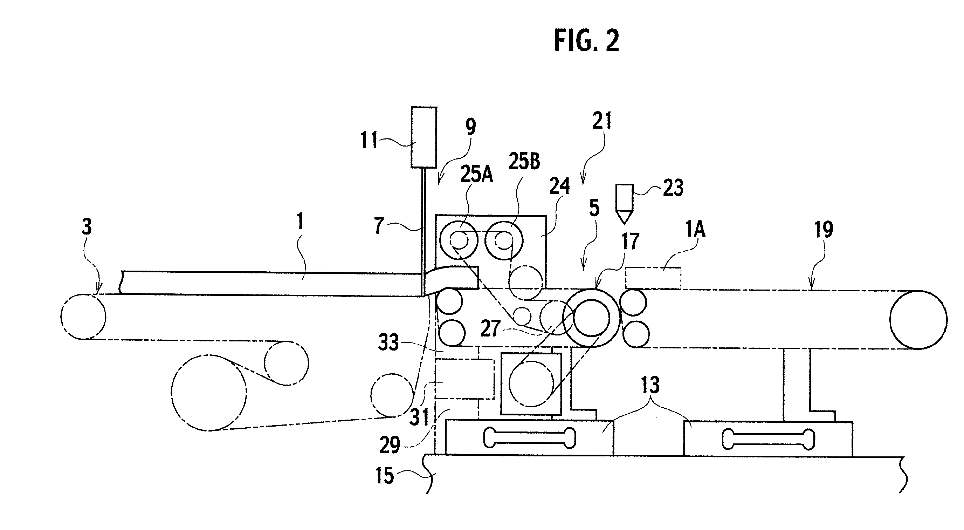

With reference to Fig. 2 conceptually and schematically showing the invention, in a dough measuring and cutting apparatus 21 according to an embodiment of the present invention, a measuring conveyor 5 as a dough measuring conveyor for measuring a food dough 1 is arranged downstream of a transferring conveyor 3 for conveying the food dough 1. Between the measuring conveyor 5 and the transferring conveyor 3, a cutting device 9 is arranged. The cutting device 9 has a vertically movable cutting blade 7 for cutting the food dough 1. The cutting blade 7 is moved up and down by an action of a suitable vertical movement actuator 11 such as an air cylinder.

Moreover, a measurement-checking conveyor 19 is arranged downstream of the measuring conveyor 5. The measurement-checking conveyor 19 is provided on a load cell 13 disposed on a mount 15. Furthermore, a rear end detecting sensor 23 is arranged above an upstream side end of the measurement-checking conveyor 19. The rear end detecting sensor 23 detects a rear end of the cut piece 1A that is cut and conveyed.

The measuring conveyor 5 includes the load cell 13 as a measuring unit on the mount 15, and also includes a belt conveyor 17 as a conveying unit.

In the dough measuring and cutting apparatus 21, when a measured value of the food dough 1 conveyed onto the measuring conveyor 5 from the transferring conveyor 3 becomes equal to a predetermined value, the cutting device 9 is activated to enable cutting of the food dough 1. Thereafter, the cut piece 1A cut off and separated from the food dough 1 is conveyed onto the measurement-checking conveyor 19 to perform measurement check of the cut piece 1A. Then, the measurement-checking conveyor 19 checks whether the weight of the cut piece 1A after being cut off and separated from the food dough 1 is accurate. Thus, cutting timing in the cutting device 9 is controlled. Therefore, the cut piece 1A cut off from the food dough 1 can be accurately cut to have a predetermined weight.

Specifically, based on a result of the measurement check by the measurement-checking conveyor 19, the cutting timing of the cutting device 9 is controlled by a control device. Thus, the cut piece 1A can be accurately cut to have a weight that is equal to a set value.

Incidentally, when the cut piece 1A has a relatively small size and weight, the cut piece 1A may adhere to the cutting blade 7 in the cutting device 9 and is integrally lifted up. Then, the cut piece 1A may fall onto the belt conveyor 17 and roll thereon during upward movement of the cutting blade 7. Therefore, it takes time for the cut piece 1A to land and settle down on the belt conveyor 17. Accordingly, it takes time to detect the rear end of the cut piece 1A by the rear end detecting sensor 23 provided at the upstream side end of the measurement-checking conveyor 19. This causes a problem in terms of improving productivity.

To solve this problem, pressing rollers 25A and 25B are rotatably provided in a vertically adjustable bracket 24 attached to a frame (not shown) of the measuring conveyor 5. The pressing rollers 25A and 25B are provided as an example of a pressing unit for pressing the cut piece 1A of the food dough 1 against the measuring conveyor 5 to prevent a cut surface of the cut piece 1A from adhering to the cutting blade 7 and being lifted up integrally therewith. The pressing rollers 25A and 25B are arranged above an upstream side end of the measuring conveyor 5 and are interlocked with and coupled to a control motor 27 such as a servo motor provided at an appropriate position in the measuring conveyor 5, via a chain, a belt or the like. Note that the pressing rollers 25A and 25B are preferably made of a material to which the cut piece 1A does not easily stick (adhere), for example, ultra high molecular weight polyethylene or the like.

The pressing rollers 25A and 25B are rotated in a feeding direction of the cut piece 1A by driving the control motor 27. Moreover, the pressing rollers 25A and 25B are rotated so as to feed the cut piece 1A at a rotation speed somewhat higher than a speed of conveying the cut piece 1A by the belt conveyor 17. Therefore, when the pressing rollers 25A and 25B are in contact with an upper surface of the cut piece 1A, the upper surface tends to be fed faster than a lower surface thereof. Thus, when the food dough 1 is cut by the cutting blade 7 in the cutting device 9, the pressing rollers 25A and 25B function to move the cut surface of the cut piece 1A away from the cutting blade 7. Note that the pressing rollers 25A and 25B may only be close to the cutting blade 7 and only one of them may be provided. Moreover, the pressing unit is not limited to the pressing rollers 25A and 25B, but may be a conveyor having a belt wound around the both pressing rollers 25A and 25B. Note that the belt preferably has its surface impregnated with oil and also has a minute uneven surface formed thereon to improve releasability of the belt from the cut piece 1A.

The rear end detecting sensor 23 needs only to be able to detect passing of the rear end of the cut piece 1A after a front end portion of the cut piece 1A is conveyed onto the measurement-checking conveyor 19. As the rear end detecting sensor 23, an optical sensor, for example, may be adopted. Moreover, for adjustment of a height position of the bracket 24, it is possible to adopt a configuration including vertically long holes provided at multiple spots on the bracket 24, for example, for fixing the bracket 24 to a frame of the belt conveyor 17 with bolts inserted into the long holes. By adjusting the height position of the bracket 24, vertical positions of the pressing rollers 25A and 25B can be adjusted.

In the configuration as described above, the height position of the bracket 24 is adjusted so as to allow the pressing rollers 25A and 25B to come into close contact with or come into slightly pressed contact with the upper surface of the food dough 1 in accordance with a thickness of the food dough 1 to be cut. In addition, the pressing rollers 25A and 25B are rotated by the control motor 27 and the food dough 1 is conveyed onto the belt conveyor 17 in the measuring conveyor 5 from the transferring conveyor 3 side. Thereby, the upper surface of the food dough 1 is pressed by the pressing rollers 25A and 25B. Thereafter, when a value measured by the measuring conveyor 5 becomes equal to a predetermined value, the cutting blade 7 in the cutting device 9 is lowered to cut the food dough 1.

In this event, since the pressing rollers 25A and 25B are provided integrally with a frame of the measuring conveyor 5, the value measured by the measuring conveyor 5 is not influenced by a pressing force pressing the cut piece 1A of the food dough 1, the pressing force preventing the cut piece 1A from adhering to the cutting blade 7 and being lifted up. Moreover, the cut surface of the cut piece 1A of the food dough 1 tends to be moved away from the cutting blade 7 by the rotation of the pressing rollers 25A and 25B. Thus, the cut piece 1A is effectively prevented from adhering to the cutting blade 7.

When the cutting blade 7 is lifted up, the cut piece 1A thus cut off tends to adhere to the cutting blade 7 and to be lifted up integrally therewith. However, the upper surface of the cut piece 1A is pressed by the pressing rollers 25A and 25B, and tends to be moved away from the cutting blade 7 by feeding action caused by the rotation of the pressing rollers 25A and 25B. Thus, the cut piece 1A is not lifted up by the cutting blade 7.

The cut piece 1A is conveyed to the measurement-checking conveyor 19 in an accelerated manner, immediately after being cut off and separated from the food dough 1. When the rear end of the cut piece 1A conveyed onto the measurement-checking conveyor 19 is detected by the rear end detecting sensor 23, the measuring conveyor 5 starts measuring a portion of the food dough 1 to be measured next.

Incidentally, in the above example, the description was given of the case where measurement of a weight of the dough to be measured next is started by use of the rear end detecting sensor 23. However, other configurations may be possible, since the cut dough piece is prevented from being lifted up and is conveyed onto the measurement-checking conveyor 19 in a time efficient manner according to conveyance of the measuring conveyor 5. For example, it is also possible to measure a required conveyance time with a timer, or to start the time measurement based on a conveyance distance of the measuring conveyor 5.

Specifically, the following configuration may be adopted. Duration of time after completion of cutting by the cutting device 9 is measured by timing units (not shown). When the measured time becomes equal to a set time (time required for the cut piece 1A to reach the vicinity of the end of the measuring conveyor 5 from a cutting position) that is previously set in the control device, measurement of the portion to be measured next can be started by the measuring conveyor 5 under the control of the control device. Moreover, the following configuration may be adopted. Since a distance between the cutting position of the cutting device 9 and the end of the measuring conveyor 5 is fixed, a conveyance distance of the cut piece 1A from the cutting position is measured by measuring rotation of the belt conveyor 17 in the measuring conveyor 5. When a measured value of the conveyance distance becomes equal to a set value previously set in the control device, measurement of the portion to be measured next can be started by the measuring conveyor 5 under the control of the control device.

As is understood from the above description, in cutting and separating the cut piece 1A from the food dough 1, the cut piece 1A that is light and small is prevented from adhering to the cutting blade 7 and being lifted up. Thus, the cut piece 1A does not fall onto and roll on the belt conveyor 17 in the measuring conveyor 5. Thus, the cut piece 1A can be stably and smoothly conveyed toward the measurement-checking conveyor 19. Therefore, the cut piece 1A can be conveyed quickly and productivity can be improved. Specifically, according to an experiment, in cutting and separating the light and small cut piece 1A of several 10 g from the food dough 1, cutting can be performed 90 times per minute while cutting is performed 70 times per minute, for example, in the conventional configuration. Thus, productivity can be improved by about 20% to 30%.

Note that, although the pressing rollers 25A and 25B are provided integrally with the frame of the measuring conveyor 5 as the dough measuring conveyor in the embodiment described above, the pressing rollers 25A and 25B may be, more specifically, provided integrally with the frame of the belt conveyor 17 as the conveying unit.

Furthermore, the present invention is not limited to the above configuration. For example, the pressing rollers 25A and 25B may be provided directly on the mount 15 without using the frame of the measuring conveyor 5 or the frame of the belt conveyor 17. Hereinafter, description will be given of a configuration according to another embodiment for adjusting a height position of the bracket 24 in which the pressing rollers 25A and 25B in the above case are rotatably provided.

As indicated by a chain double-dashed line in Fig. 2, a base bracket 29 is provided on the mount 15, and a height position adjustment mechanism 31 is provided on the base bracket 29. In addition, a lower bracket 33 connected to a lower portion of the bracket 24 is connected to the height position adjustment mechanism 31. The height position adjustment mechanism 31 is a mechanism including a control motor such as a servo motor, a screw and a guide member, a mechanism including a linear motor and a guide member, or a mechanism including an actuator and a guide member.

The above configuration allows height positions of the pressing rollers 25A and 25B to be accurately adjusted by the height position adjustment mechanism 31 even if the thickness of the cut piece 1A is changed along with change in production lot. Moreover, a setup time for a process line due to the change in production lot can be shortened. Thus, the productivity can be improved. Consequently, the cut piece 1A is prevented from adhering to the cutting blade in the cutting device and being lifted up, and the pressing force applied to the cut piece 1A by the pressing rollers 25A and 25B can be minimized. Therefore, the pressing force applied to the cut piece 1A by the pressing rollers 25A and 25B can be minimized and thus quality of a product made of the cut piece 1A or quality in the next step can be improved.

The present invention is not limited to the above description of the embodiments of the invention, but can be carried out in various other forms by making appropriate changes thereto.

Note that the entire contents of Japanese Patent Application No. 2007-108535 (filed: April 17, 2007) are incorporated herein by reference.

## Claims

1. A dough measuring conveyor to measure a food dough, comprising:
a measuring unit to measure a weight of the food dough;
a conveying unit to convey the food dough; and
a dough pressing unit to press the food dough against the conveying unit from above the conveying unit to prevent a cut piece of the food dough from being lifted up.

2. The dough measuring conveyor according to claim 1, wherein the dough pressing unit is provided to be vertically adjustable.

3. The dough measuring conveyor according to claim 2, wherein the dough pressing unit is provided integrally with a frame of the conveying unit.

4. The dough measuring conveyor according to claim 2, wherein the dough pressing unit is provided on a mount to mount the dough measuring conveyor.

5. The dough measuring conveyor according to claim 4, wherein the dough pressing unit is provided on the mount via a height position adjustment mechanism.

6. A dough measuring and cutting apparatus, comprising:
a dough measuring conveyor to measure a food dough;
a transferring conveyor to convey the food dough onto the dough measuring conveyor;
a cutting device to cut the food dough at a position between the dough measuring conveyor and the transferring conveyor;
a measurement-checking conveyor to perform measurement check of a cut piece cut off from the food dough, the measurement-checking conveyor being arranged downstream of the dough measuring conveyor;
a dough pressing unit to prevent the cut piece of the food dough from being lifted up at a position above the dough measuring conveyor; and
a rear end detecting sensor to detect a rear end of the cut piece conveyed on the measurement-checking conveyor.

7. A dough measuring and cutting apparatus, comprising:
a dough measuring conveyor to measure a food dough;
a transferring conveyor to convey the food dough onto the dough measuring conveyor;
a cutting device to cut the food dough at a position between the dough measuring conveyor and the transferring conveyor;
a measurement-checking conveyor to perform measurement check of a cut piece cut off from the food dough, the measurement-checking conveyor being arranged downstream of the dough measuring conveyor; and
a dough pressing unit to prevent the cut piece of the food dough from being lifted up at position above the dough measuring conveyor,
wherein the dough measuring and cutting apparatus is configured to allow the dough measuring conveyor to start measurement of a portion to be measured next, when a conveyance time of the dough measuring conveyor after completion of cutting by the cutting device becomes equal to a set value, or when a conveyance distance of the cut piece conveyed by the dough measuring conveyor from the cutting position becomes equal to a set value.
